# EUROPÄISCHE PATENTSCHRIFT

(11) **EP 1 032 951 B1**
(45) Veröffentlichungstag und Bekanntmachung des Hinweises auf die Patenterteilung: **26.02.2003**
(21) Anmeldenummer: 98965583.2
(22) Anmeldetag: 18.11.1998
(51) Int. Cl.: H01M 4/96, C04B 38/00, C04B 35/524

(54) **GASDIFFUSIONSELEKTRODE UND DEREN HERSTELLUNG**
GAS DIFFUSION ELECTRODES AND THE PRODUCTION THEREOF
ELECTRODE DE SEPARATION PAR DIFFUSION GAZEUSE ET SA PRODUCTION

(30) Priorität: 19.11.1997 DE 19751297
(43) Veröffentlichungstag der Anmeldung: 06.09.2000
(73) Patentinhaber: SIEMENS AKTIENGESELLSCHAFT, 80333 München (DE); Bayerisches Zentrum für Angewandte Energieforschung e.V. ZAE Bayern, 97074 Würzburg (DE)
(72) Erfinder: LEUSCHNER, Rainer, D-91091 Grossenseebach (DE); LIPINSKI, Matthias, D-91052 Erlangen (DE); PETRICEVIC, Raino, D-97080 Würzburg (DE); FRICKE, Jochen, D-97218 Gerbrunn (DE)
(74) Vertreter: Berg, Peter, Dipl.-Ing.
(86) Internationale Anmeldenummer: DE9803417
(87) Internationale Veröffentlichungsnummer: WO99027597

(56) Entgegenhaltungen:
- WO-A-93/14511
- WO-A-95/06002
- WO-A-99/01502
- DE-A- 19 523 382
- CHEMICAL ABSTRACTS, vol. 111, no. 12, 18. September 1989 Columbus, Ohio, US; abstract no. 101922t, Y. UNO: Seite 296; XP000181530 & JP 01 051385 A (ID.)
- CHEMICAL ABSTRACTS, vol. 106, no. 20, 18. Mai 1987 Columbus, Ohio, US; abstract no. 161603w, O. IWAKI, ET AL.: Seite 337; XP002100057 & JP 62 012681 A (ID.)

## Beschreibung

Die Erfindung betrifft eine Gasdiffusionselektrode aus Kohlenstoff für eine Brennstoffzelle sowie ein Verfahren zu deren Herstellung.

Gasdiffusionselektroden gelangen insbesondere in Batterien und vor allem in Brennstoffzellen, wie PEM-Brennstoffzellen (PEM = Polymer-Elektrolyt-Membran), zum Einsatz. In Brennstoffzellen kann beispielsweise die im Wasserstoff und Sauerstoff chemisch gespeicherte Energie, die bei einer Knallgasreaktion freigesetzt werden würde, mittels eines elektrochemischen Prozesses, der eine Umkehrung der Wasserelektrolyse darstellt, in elektrische Energie umgewandelt werden.

PEM-Brennstoffzellen weisen eine zentrale Membran/Elektroden-Einheit auf, die aus einem folienförmigen, protonenleitenden Festkörperelektrolyt besteht, an dem beidseitig möglichst glatte hydrophobe, poröse Gasdiffusionselektroden mit einer Katalysatorbeschichtung angeordnet sind. Der Elektrode auf der Kathodenseite wird Sauerstoff zugeführt, der Elektrode auf der Anodenseite Wasserstoff. Auf den mit Katalysator beschichteten Oberflächen der Elektroden findet ein Elektronenaustausch statt, wodurch eine elektrische Spannung aufgebaut wird. Auf der Kathodenseite entsteht Wasser als Reaktionsprodukt des elektrochemischen Prozesses.

An die Elektroden werden folgende Anforderungen gestellt: Gute elektrische Leitfähigkeit, gute Gasdurchlässigkeit und mechanische Stabilität; außerdem sollen sie eine glatte äußere Oberfläche aufweisen. Eine glatte Oberfläche ist sehr wichtig, weil dadurch der bestmögliche Kontakt - und damit ein geringer elektrischer Kontaktwiderstand - zwischen Elektrode, Katalysator und Elektrolyt zu realisieren ist. Die Elektroden sollen deshalb höchstens eine Oberflächenrauhigkeit im Mikrometer-Bereich besitzen. Um einen ausreichenden Gasfluß zu ermöglichen, soll die Permeabilität der Elektroden für Stickstoff > 10⁻⁶ m²/s bei Normaldruck sein, vorzugsweise > 10⁻⁵ m²/s. Hierzu sollten die größten Poren einen Durchmesser ≥ 100 nm aufweisen, vorzugsweise sollte der Durchmesser 0,5 bis 10 µm betragen. Wichtig ist auch ein hydrophober Charakter der Elektroden. Dadurch wird nämlich verhindert, daß sich das bei der elektrochemischen Reaktion zwischen Wasserstoff und Sauerstoff gebildete Wasser in den Poren ansammelt und diese verstopft.

Um die genannten Anforderungen zu erfüllen, werden in Gasdiffusionselektroden modifizierte Kohlepapiere eingesetzt, d.h. Kohlepapiere, die an der Oberfläche mit Ruß oder Graphit verdichtet sind. Diese Materialien sind aber hinsichtlich Oberflächenglätte und Porengröße nicht ausreichend.

Aus der US-PS 5 260 855 ist es bekannt, in Kondensatoren hoher Kapazität ("supercapacitors") Elektroden aus Schaumkohlenstoff einzusetzen; der Schaumkohlenstoff kann ein Aerogel oder Xerogel sein. Auch derartige Elektroden genügen nicht den vorstehend genannten Anforderungen. Zur Erhöhung der elektrischen Leitfähigkeit wird in das Aerogel nämlich eine Kohlenstoffmatrix integriert. Dazu wird die Kohlenstoffmatrix, beispielsweise in Form von Kohlenstoff-Fasern, vor der Gelierung und Pyrolyse in das Gel eingebracht. Da Aerogel und Kohlenstoffmatrix bei der Pyrolyse ein unterschiedliches Schrumpfverhalten zeigen, entstehen Mikrorisse. Das pyrolysierte Aerogel verliert damit teilweise die Haftung an der Oberfläche der Kohlenstoffmatrix. Die durch das Matrixmaterial bestimmte Porengröße der Elektroden kann deshalb nicht exakt eingestellt und reproduziert werden, außerdem wird die Oberfläche der Elektroden bei der Pyrolyse stark aufgerauht.

Kohlenstoff-Aerogele, die durch Pyrolyse aus Aerogelen auf der Basis organischer Verbindungen hergestellt werden (siehe dazu: R.W. Pekala, C.T. Alviso, Materials Research Society 1992 Spring Meeting San Francisco, April 1992, Proceedings 270 (1992), Seite 3), besitzen - aufgrund ihrer hohen Porosität - zwar Eigenschaften, die einen Einsatz in Gasdiffusionselektroden erlauben, da sie von Natur aus spröde sind, müssen sie für diesen Zweck aber mechanisch stabilisiert werden. Die bislang dafür verwendeten Stützgerüste in Form von Kohlefasern (WO 95/06002) oder anorganischem Fasermaterial aus Aluminiumoxid, Siliciumdioxid oder Zirconiumdioxid (DE 195 23 382 A1) erfüllen aber die Bedingung eines angepaßten Ausdehnungskoeffizienten nur unzureichend, da diese Materialien dem starken Schrumpfungsprozeß der organischen Aerogel-Vorstufe nicht folgen können. Es treten deshalb Defekte und Abrisse zwischen den Fasern und dem Aerogel auf; makroskopisch gesehen sind die dünnen, flachen Kohlenstoff-Aerogele deshalb auch wellig. Weiterhin ist aus der WO 99/01502 A1 ein offenzelliger organischer Schaum aus Kohlenstoff unter Verwendung von Aerogelen und Xerogelen bekannt, der zur Herstellung von Gasdiffusionselektroden für Zweischicht-Kondensatoren vorgesehen ist.

Ausgehend vom Stand der Technik ist es Aufgabe der Erfindung, eine Gasdiffusionselektrode aus Kohlenstoff bereitzustellen, die eine glatte Oberfläche aufweist, bei der die Porosität beliebig eingestellt werden kann und bei der keine durch Abrisse zwischen dem Elektrodenmaterial und einem Stützgerüst bedingten Probleme auftreten.

Dies wird erfindungsgemäß durch eine Gasdiffusionselektrode erreicht, die durch Pyrolyse eines Verbundes aus einem organischen Aerogel oder Xerogel und einem ganz oder teilweise aus organischem Material bestehenden Verstärkungsgerüst erhältlich ist, wobei der Verbund hydrophobiert ist.

Die Gasdiffusionselektrode nach der Erfindung, die porös ist und eine äußerst glatte Oberfläche aufweist, kann flach und dünn ausgestaltet sein. Dazu wird von porösen, dünnen, flachen Verstärkungsgerüsten ausgegangen.

Das Verstärkungsgerüst, das zur Stabilisierung des Aerogels bzw. Xerogels dient, besteht wenigstens teilweise aus organischem Material. Dies bedeutet im allgemeinen, daß wenigstens 80 % des Verstärkungsgerüstes organisches Material sind. Nicht-organische Anteile können beispielsweise Glasfasern oder auch Flammschutzmittel, wie Borsalze, sein. Das organische Material des Verstärkungsgerüstes weist bei der Pyrolyse eine dem Aerogel bzw. Xerogel vergleichbare Schrumpfung auf (Volumenschrumpf) und das Gerüst ist nach der Pyrolyse noch so stabil, daß es eine Stützfunktion für das pyrolysierte Aerogel bzw. Xerogel übernehmen kann.

Von Vorteil ist, wenn das Verstärkungsgerüst durch das Aerogel bzw. Xerogel gut benetzbar ist. Dazu weist das organische Material vorzugsweise Partialstrukturen auf, die Wasserstoffbrücken ausbilden können. Dies sind insbesondere funktionelle Gruppen wie OH, OR, CO, COOH, COOR, CN, NH₂, NHR, NR₂, CONH₂, CONHR, CONR₂, CO-NH-CO und CO-NR-CO. Besonders vorteilhaft erweisen sich dabei Hydroxyl- und Carbonsäureamidgruppen.

Die Gasdiffusionselektrode nach der Erfindung weist gegenüber bekannten Elektroden deutliche Verbesserungen auf. Dies ist auf die Verwendung eines Verstärkungsgerüstes aus organischem Material zurückzuführen, das bei der Herstellung der Elektrode zusammen mit dem Aerogel bzw. Xerogel - je nach Art und Porosität (des Verstärkungsgerüstes) - eine völlig neue Struktur ausbildet.

Für das Verstärkungsgerüst dienen als organisches Material vorzugsweise Cellulose, Polyamide, insbesondere aromatische Polyamide (Aramide), Polyester und Phenolharze, wie Phenol/Formaldehyd-Harze, insbesondere Novolake. Daneben kommen beispielsweise aber auch folgende Materialien in Betracht: Polymethylmethacrylat, Polyacrylnitril, Polyharnstoff, Polyurethan, Papier und Zellwolle. Das Verstärkungsgerüst selbst kann in Form von porösen Membranen, wie poröses Filtermaterial, sowie flexiblen Faservliesen und Fasergeweben vorliegen.

Das Verstärkungsgerüst kann vorteilhaft einen Porenradiengradienten aufweisen. Dies kann in einfacher Art in der Weise realisiert werden, daß beispielsweise organische Membranen mit unterschiedlicher Porengröße nebeneinander angeordnet und miteinander verbunden, beispielsweise verklebt, werden. Durch den Porenradiengradienten (in den Elektroden), wobei die Elektroden auf der Elektrolytseite eine feinere Porenstruktur als auf der Gasversorgungsseite aufweisen, wird der Abtransport des Wassers - und entsprechend die Leistungsfähigkeit der Brennstoffzelle - erhöht. Bei einem derartigen Verstärkungsgerüst dient die gröber strukturierte Membran außerdem zur zusätzlichen mechanischen Stabilisierung des Aerogels bzw. Xerogels und der daraus entstehenden feinporigen Kohlenstoffschicht. Porengröße, Oberflächenglätte und mechanische Stabilität können somit über das Verstärkungsgerüst in einfacher Weise und gezielt eingestellt werden.

Als Aerogele und Xerogele werden inbesondere solche auf der Basis von Resorcin und Formaldehyd (als Monomere) eingesetzt. Neben Resorcin (1,3-Dihydroxybenzol) können aber auch andere phenolische Verbindungen verwendet werden, beispielsweise Phenol selbst und die anderen Dihydroxybenzole, d.h. Brenzcatechin und Hydrochinon, sowie Trihydroxybenzole, wie Pyrogallol und Phloroglucin, und ferner Bisphenol-A. Der phenolische Ring kann auch weitere Substituenten aufweisen, beispielsweise Alkylgruppen, substituierte Alkylgruppen, wie CH₂OH, und Carboxylgruppen, d.h. es können beispielsweise Verbindungen wie Alkylphenole und Dihydroxybenzoesäuren eingesetzt werden. Anstelle der phenolischen Komponente können auch Verbindungen wie Melamin verwendet werden. Der Formaldehyd kann durch andere Aldehyde ersetzt werden, beispielsweise durch Furfural (α-Furfurylaldehyd).

Die Herstellung der Gasdiffusionselektrode nach der Erfindung erfolgt vorteilhaft in der Weise, daß das Verstärkungsgerüst mit einer basischen Lösung von Monomeren ("Monomerlösung"), die in ein Aerogel oder Xerogel übergeführt werden können, getränkt wird. Dann wird geliert und gealtert, und nachfolgend wird getrocknet und unter Schutzgas pyrolysiert. Falls erforderlich, erfolgt anschließend noch eine Hydrophobierung.

Bei der Gelierung und bei der Pyrolyse kann eine Wechselwirkung zwischen der Monomerlösung und dem organischen Material des Verstärkungsgerüstes erfolgen. So kann die Gelierung durch das organische Material in ähnlicher Weise beschleunigt werden wie durch einen Katalysator. Dies hat zur Folge, daß eine Clusteraggregation bzw. Sol-Gel-Polymerisation schneller erfolgt und damit insgesamt deutlich feinere Strukturen ausgebildet werden. Dieser Effekt ist um so größer, je stärker die Wechselwirkung zwischen dem Verstärkungsgerüst und dem Gel ist.

Bei sehr hydrophilen organischen Materialien (für das Verstärkungsgerüst), wie Cellulose, mit zum Teil reaktionsfreudigen funktionellen Gruppen auf der Gerüstoberfläche kommt es zu einer Anlagerung von organischen Gruppen des Gels auf der Gerüstoberfläche, so daß diese sehr effektiv beschichtet wird. Dies führt letztendlich zu einer sehr stabilen Elektrodenstruktur, obwohl die Einzelkomponenten diese Eigenschaften nicht in dieser Weise besitzen.

Bei Verstärkungsgerüsten aus faservliesartigem organischen Material, wie Aramid, mit geringer ausgeprägtem hydrophilen Charakter erfolgt nicht ausschließlich eine Anlagerung der organischen Gruppen des Gels an das Verstärkungsgerüst. Unter dem Einfluß der Fasern bildet sich vielmehr zusätzlich ein feinporiges Gel-Netzwerk mit Poren mit einem Durchmesser > 100 nm. Gasdiffusionselektroden mit einer derartigen Faserstruktur weisen ebenfalls eine sehr glatte und homogene äußere Oberfläche auf.

Neben dem Vorteil, daß das Verstärkungsgerüst aus organischem Material von der Monomerlösung gut benetzt wird, was deren Verarbeitung erleichtert und in vorteilhafter Weise die Struktur und damit die Eigenschaften, wie Porengröße, des daraus entstehenden Aerogels bzw. Xerogels beeinflußt, zeigt sich ein weiterer Vorteil eines derartigen Stützgerüstes bei der Pyrolyse. Das organische Material weist nämlich vergleichbare Schrumpfeigenschaften wie das Aerogel bzw. Xerogel auf. Aufgrund dieser Tatsache werden bei der Pyrolyse Aufwölbungen und Risse, d.h. ein Abreißen des Aerogels bzw. Xerogels vom organischen Membran- oder Fasermaterial, vermieden, so daß homogene und glatte Oberflächen erhalten werden.

Der wesentliche und grundlegende Unterschied zwischen Stützgerüsten aus formatierten Kohlegeweben oder anorganischen Fasern entsprechend dem Stand der Technik und Verstärkungsgerüsten aus organischem Material besteht somit darin, daß die organischen Materialien ein ähnliches Schrumpfverhalten aufweisen wie die organischen Aerogele und Xerogele. Dies dürfte daran liegen, daß die organischen Materialien bei der Pyrolyse einem ähnlichen Umwandlungsprozeß unterworfen sind wie Aerogele und Xerogele. Diese Eigenschaft ist deshalb wichtig, weil dadurch während der Pyrolyse sowohl der Verbund zwischen Aerogel bzw. Xerogel und Verstärkungsgerüst als auch die glatte äußere Oberfläche erhalten bleibt. Erreicht wird dies dadurch, daß Rißbildungen, die - bei der Pyrolyse - aufgrund der unterschiedlichen Zugkräfte zwischen Verstärkungsgerüst und Aerogel bzw. Xerogel auftreten können, durch das gemeinsame Schrumpfen und durch die gute Ankopplung des Aerogels bzw. Xerogels an das organische Verstärkungsgerüst wirksam vermieden werden. Im Gegensatz zu nicht-organischen Stützgerüsten besteht in diesem Fall, selbst nach der Pyrolyse, noch eine innige Verbindung zwischen dem pyrolysierten Aerogel bzw. Xerogel und dem pyrolysierten Verstärkungsgerüst. Dies führt auch zu einer zusätzlichen Verbesserung der Oberflächenglätte.

Aufgrund der Verwendung eines Verstärkungsgerüstes aus organischem Material kann außerdem die Herstellung der Gasdiffusionselektroden so vereinfacht werden, daß eine Massenfertigung realisierbar ist. Die Vereinfachung im Herstellungsverfahren ergibt sich insbesondere bei Elektroden, bei denen als Verstärkungsgerüst papierartige, sehr hydrophile Membranen, beispielsweise aus Cellulose oder Polyamid, eingesetzt werden. Aufgrund der hohen Saugfähigkeit derartiger Membranen sind nämlich bei der Herstellung der Elektroden störende Lufteinschlüsse nahezu ausgeschlossen.

Die Herstellung von dünnen, flachen, porösen, hydrophoben Gasdiffusionselektroden nach der Erfindung erfolgt im einzelnen prinzipiell folgendermaßen.

Das jeweilige Verstärkungsgerüst wird mit einer Lösung der Monomeren, vorzugsweise Resorcin und Formaldehyd, getränkt. Als Katalysator für die Überführung in das Aerogel bzw. Xerogel dient eine Base, vorzugsweise Natriumcarbonat. Das getränkte Verstärkungsgerüst wird dann auf ein planes Substrat, vorzugsweise eine Glasplatte, gelegt und mit einer weiteren Glasplatte abgedeckt, so daß die Probe während der Gelierung nicht austrocknen kann. Die Probe bleibt in dieser Form einige Zeit liegen, wobei die Gelierung und Alterung erfolgt. Dies geschieht vorzugsweise bei einer langsam ansteigenden Temperatur zwischen Raumtemperatur und ca. 90°C.

Vor dem Trocknen des Gels wird die in den Poren verbliebene Flüssigkeit, hauptsächlich Wasser, vorteilhaft durch eine Flüssigkeit mit geringer Oberflächenspannung ersetzt, vorzugsweise Aceton. Bei Verstärkungsmaterialien, die von Aceton angegriffen werden, kann ein anderes Lösemittel verwendet werden, beispielsweise Ethanol. Bei einer derartigen Vorgehensweise kann die durch die Trocknung bedingte Schrumpfung drastisch reduziert und das Entstehen von Rissen im Verstärkungsgerüst/Gel-Verbund vermieden werden. In manchen Fällen ist diese Vorgehensweise jedoch unkritisch, so daß ein Flüssigkeitsaustausch unterbleiben kann.

Die Trocknung (der Proben) erfolgt vorzugsweise unterkritisch, d.h. man läßt die verbleibende Porenflüssigkeit bei Normaldruck entweichen; vorteilhaft erfolgt dies bei erhöhter Temperatur, insbesondere bei ca. 50°C. Alternativ kann aber auch überkritisch getrocknet werden. Hierbei wird die Probe beispielsweise in einem Autoklaven mit Kohlendioxid behandelt. Dabei wird die Porenflüssigkeit durch überkritisches Kohlendioxid verdrängt, das nachfolgend langsam verdampft wird.

Die anschließende Pyrolyse erfolgt vorzugsweise bei einer Temperatur zwischen 600 und 2000°C, und zwar unter Schutzgas (insbesondere Argon oder Stickstoff), in reduzierender Atmosphäre (insbesondere Wasserstoff oder Methan) oder im Vakuum. Bei der Pyrolyse werden die organischen Bestandteile des Aerogels bzw. Xerogels und diejenigen des Verstärkungsgerüstes in Kohlenstoff übergeführt. Dabei ist es zweckmäßig, die Proben mit ausreichend temperaturstabilen, inerten Materialien, vorzugsweise Keramiken, zu belasten, um eine Verbiegung zu vermeiden. Durch das angepaßte Schrumpfen des organischen Verstärkungsgerüstes resultieren hierbei dünne, stabilisierte Elektrodenmaterialien mit einer bislang nicht erreichten glatten Oberfläche.

Die Hydrophobierung der in der vorstehend beschriebenen Weise hergestellten Elektrodenmaterialien, die für die Verwendung dieser Materialien in Brennstoffzellen erforderlich ist, erfolgt vorzugsweise durch eine Silylierung (der inneren Oberfläche). Dazu werden die Elektroden beispielsweise mit einer Lösung von Trimethylchlorsilan getränkt oder mit gasförmigem Trimethylchlorsilan behandelt. Anstelle einer Silylierung kann auch eine Hydrophobierung mit einem perfluorierten Polymer erfolgen. Dazu werden die Elektroden beispielsweise mit einer Lösung eines Copolymers aus Perfluor-2,2-dimethyldioxol und Tetrafluorethylen getränkt.

Anhand von Ausführungsbeispielen soll die Erfindung noch näher erläutert werden.

### Beispiel 1

10 g einer 40 %igen Formaldehydlösung werden mit 7,3 g Resorcin vermischt, und dazu werden 0,9 g einer 0,0992 n Natriumcarbonatlösung sowie 19,55 g Wasser gegeben. Mit dieser Lösung wird eine Cellulosemembran (mittlerer Porendurchmesser: ca. 1 µm) getränkt, die dann - nach dem Sandwichprinzip - zwischen zwei planparallele Glasplatten gelegt und in einem geschlossenen Behälter etwa 24 h bei Raumtemperatur unter Luftausschluß gelagert wird. Nach einer weiteren Lagerung für etwa 24 h bei ca. 50°C geliert die Probe. Die Probe läßt man dann 1 bis 3 Tage bei einer Temperatur von ca. 90°C altern, anschließend wird die Porenflüssigkeit, d.h. das Wasser, durch Aceton ersetzt. Dann wird die Probe bei einer Temperatur von ca. 50°C unterkritisch getrocknet, wobei die in den Poren enthaltene Flüssigkeit verdampft; dabei wird ein Xerogel erhalten. Nachfolgend wird die getrocknete Probe bei ca. 1050°C in einer Argonatmosphäre pyrolysiert (Dauer: etwa 2 h). Die anschließende Hydrophobierung erfolgt in der Weise, daß die Probe zunächst etwa 24 h bei ca. 90°C einer gesättigten Wasserdampfatmosphäre ausgesetzt wird. Diese Prozedur wird in einer gesättigten Trimethylchlorsilan-Atmosphäre wiederholt, und dann wird die Probe bei ca. 90°C getrocknet.

Bei einer derartigen Vorgehensweise wird eine hydrophobe, mechanisch stabile Gasdiffusionselektrode mit einem Porendurchmesser von ca. 1 um erhalten. Die Oberflächenrauhigkeit der Elektrode liegt in der gleichen Größenordnung.

### Beispiel 2

15 g einer 40 %igen Formaldehydlösung werden mit 10,99 g Resorcin vermischt, und dazu werden 4,035 g einer 0,0992 n Natriumcarbonatlösung sowie 3,975 g Wasser gegeben. Mit dieser Lösung wird ein grobporöser Cellulosefilter (mittlerer Porendurchmesser: ca. 10 µm) getränkt, der dann - nach dem Sandwichprinzip - zwischen zwei planparallele Glasplatten gelegt und in einem geschlossenen Behälter 1 bis 2 Tage bei Raumtemperatur unter Luftausschluß gelagert wird; hierbei geliert die Probe. Die Probe läßt man dann 1 bis 3 Tage bei einer Temperatur von ca. 50 bis 90°C altern, anschließend wird die Porenflüssigkeit, d.h. das Wasser, durch Aceton ersetzt. Dann wird die Probe bei einer Temperatur von ca. 50°C unterkritisch getrocknet, wobei die in den Poren enthaltene Flüssigkeit verdampft; dabei wird ein Xerogel erhalten. Nachfolgend wird die getrocknete Probe bei ca. 1800°C in einer Argonatmosphäre pyrolysiert (Dauer: etwa 1 h). Die anschließende Hydrophobierung erfolgt in der Weise, daß die Probe mit einer 6 %igen Lösung eines Copolymers aus Perfluor-2,2-dimethyldioxol und Tetrafluorethylen in Perfluordecan getränkt wird. Nach dem Abtropfen der überschüssigen Lösung wird die Probe durch eine thermische Behandlung getrocknet und ausgehärtet, und zwar folgendermaßen: zunächst 5 bis 10 min bei 112°C, dann 5 min bei 165°C und schließlich 15 min bei ca. 330°C.

Bei einer derartigen Vorgehensweise wird eine hydrophobe, mechanisch stabile Gasdiffusionselektrode mit einem Porendurchmesser von ca. 10 µm erhalten. Die Oberflächenrauhigkeit der Elektrode liegt in der gleichen Größenordnung.

### Beispiel 3

10 g einer 40 %igen Formaldehydlösung werden mit 7,3 g Resorcin vermischt, und dazu werden 0,9 g einer 0,0992 n Natriumcarbonatlösung sowie 19,55 g Wasser gegeben. Mit dieser Lösung wird ein Aramid-Faservlies, das sich auf einer Glasplatte befindet, getränkt. Um eine definierte Probendicke zu erreichen, wird um das getränkte Faservlies ein Ring aus Polytetrafluorethylen gelegt. Danach wird das Faservlies - nach dem Sandwichprinzip - mit einer zweiten Glasplatte bedeckt. Die Probe wird dann in einem geschlossenen Behälter etwa 24 h bei Raumtemperatur unter Luftausschluß gelagert. Nach einer weiteren Lagerung für etwa 24 h bei ca. 50°C geliert die Probe. Die Probe läßt man dann 1 bis 3 Tage bei einer Temperatur von ca. 90°C altern, anschließend wird die Porenflüssigkeit, d.h. das Wasser, durch Aceton ersetzt. Dann wird die Probe bei einer Temperatur von ca. 50°C unterkritisch getrocknet, wobei die in den Poren enthaltene Flüssigkeit verdampft; dabei wird ein Xerogel erhalten. Nachfolgend wird die getrocknete Probe bei ca. 1050°C in einer Argonatmosphäre pyrolysiert (Dauer: etwa 2 h). Die anschließende Hydrophobierung erfolgt in der gleichen Weise wie in Beispiel 1.

Bei einer derartigen Vorgehensweise wird eine hydrophobe, mechanisch stabile Gasdiffusionselektrode mit einem Porendurchmesser von einigen 100 nm und einer glatten äußeren Oberfläche erhalten. Das Faservlies wird sehr gut in die Xerogelmatrix integriert.

### Beispiel 4

Entsprechend Beispiel 1 wird eine Gasdiffusionselektrode hergestellt, wobei - anstelle einer Cellulosemembran - eine Polyamidmembran (mittlerer Porendurchmesser: ca. 0,4 µm) eingesetzt wird. Der Flüssigkeitsaustausch nach der Alterung entfällt in diesem Fall.

Hierbei wird eine hydrophobe, mechanisch stabile Gasdiffusionselektrode mit einem Porendurchmesser von einigen 100 nm und einer spiegelnd glatten Oberfläche erhalten.

### Beispiel 5

10 g einer 40 %igen Formaldehydlösung werden mit 7,3 g Resorcin vermischt, und dazu werden 0,9 g einer 0,0992 n Natriumcarbonatlösung sowie 19,55 g Wasser gegeben. Mit dieser Lösung wird ein Polyesterfilter (mittlerer Porendurchmesser: ca. 75 µm) getränkt und nachfolgend mit der Lösung nochmals besprüht. Dann wird der Filter - nach dem Sandwichprinzip - zwischen zwei planparallele Glasplatten gelegt und in einem geschlossenen Behälter etwa 24 h bei Raumtemperatur unter Luftausschluß gelagert wird. Nach einer weiteren Lagerung für etwa 24 h bei ca. 50°C geliert die Probe. Die Probe läßt man dann 1 bis 3 Tage bei einer Temperatur von ca. 90°C altern. Anschließend wird die Probe in einem Autoklaven mit Kohlendioxid überkritisch getrocknet; dabei wird ein Aerogel erhalten. Nachfolgend wird die getrocknete Probe bei ca. 1050°C in einer Argonatmosphäre pyrolysiert (Dauer: etwa 2 h). Die anschließende Hydrophobierung erfolgt in der gleichen Weise wie in Beispiel 1.

Bei einer derartigen Vorgehensweise wird eine hydrophobe, mechanisch stabile Gasdiffusionselektrode mit einem Porendurchmesser von ca. 0,1 µm erhalten. Die Oberflächenrauhigkeit der Elektrode liegt in der gleichen Größenordnung.

## Patentansprüche

1. Gasdiffusionselektrode aus Kohlenstoff für eine Brennstoffzelle, erhältlich durch Pyrolyse eines Verbundes aus einem organischen Aerogel oder Xerogel und einem ganz oder teilweise aus organischem Material bestehenden Verstärkungsgerüst, wobei der Verbund hydrophobiert ist.

2. Gasdiffusionselektrode nach Anspruch 1, **dadurch gekennzeichnet, daß** das organische Material Partialstrukturen aufweist, die Wasserstoffbrücken ausbilden können.

3. Gasdiffusionselektrode nach Anspruche 1 oder 2, **dadurch gekennzeichnet, daß** das organische Material Cellulose, Polyamid, insbesondere aromatisches Polyamid, Polyester oder Phenolharz ist.

4. Gasdiffusionselektrode nach einem oder mehreren der Ansprüche 1 bis 3, **dadurch gekennzeichnet, daß** das Verstärkungsgerüst einen Porenradiengradienten aufweist.

5. Verfahren zur Herstellung einer Gasdiffusionselektrode nach einem oder mehreren der Ansprüche 1 bis 4, **dadurch gekennzeichnet, daß** das Verstärkungsgerüst mit einer basischen Lösung von ein Aerogel bzw. Xerogel bildenden Monomeren getränkt wird, daß geliert und gealtert wird, daß getrocknet und nachfolgend unter Schutzgas pyrolysiert wird, und daß hydrophobiert wird.

6. Verfahren nach Anspruch 5, **dadurch gekennzeichnet, daß** vor der Trocknung die Porenflüssigkeit durch eine Flüssigkeit mit geringer Oberflächenspannung ersetzt wird.

7. Verfahren nach Anspruch 5 oder 6, **dadurch gekennzeichnet, daß** unterkritisch getrocknet wird.

8. Verfahren nach einem der Ansprüche 5 bis 7, **dadurch gekennzeichnet, daß** die Pyrolyse bei einer Temperatur zwischen 600 und 2000°C durchgeführt wird.

9. Verfahren nach einem oder mehreren der Ansprüche 5 bis 8, **dadurch gekennzeichnet, daß** die Hydrohobierung durch eine Silylierung erfolgt.

## Claims

1. A gas diffusion electrode of carbon for a fuel cell obtainable by pyrolysis of a composite of an organic aerogel or xerogel and a reinforcing skeleton consisting entirely or in part of organic material, the composite being hydrophobised.

2. A gas diffusion electrode according to claim 1, **characterised in that** the organic material has substructures which can form hydrogen bridges.

3. A gas diffusion electrode according to claim 1 or 2, **characterised in that** the organic material is cellulose, polyamide, in particular aromatic polyamide, polyester or phenolic resin.

4. A gas diffusion electrode according to one or more of claims 1 to 3, **characterised in that** the reinforcing skeleton has a pore radius gradient.

5. A process for the production of a gas diffusion electrode according to one or more of claims 1 to 4, **characterised in that** the reinforcing skeleton is impregnated with a basic solution of monomers which form an aerogel or xerogel, that gelation and ageing are performed, that drying and subsequently pyrolysis under protective gas are performed and hydrophobisation is performed.

6. A process according to claim 5, **characterised in that**, prior to drying, the liquid in the pores is replaced by a liquid having a low surface tension.

7. A process according to claim 5 or 6, **characterised in that** drying is performed subcritically.

8. A process according to one of claims 5 to 7, **characterised in that** pyrolysis is carried out at a temperature of between 600 and 2000°C.

9. A process according to one or more of claims 5 to 8, **characterised in that** hydrophobisation proceeds by silylation.

## Revendications

1. Electrode de séparation par diffusion gazeuse en carbone pour une pile à combustible, que l'on peut obtenir par pyrolyse d'un composite constitué d'un aérogel ou d'un xérogel organique et d'un squelette de renfort constitué en tout ou partie d'un matière organique, le composite étant rendu hydrophobe.

2. Electrode de séparation par diffusion gazeuse suivant la revendication 1, **caractérisée en ce que** la matière organique a des structures partielles qui peuvent former des ponts hydrogènes.

3. Electrode de séparation par diffusion gazeuse suivant la revendication 1 ou 2, **caractérisée en ce que** la matière organique est de la cellulose, un polyamide, notamment un polyamide aromatique, un polyester ou une résine phénolique.

4. Electrode de séparation par diffusion gazeuse suivant l'une ou plusieurs des revendications 1 à 3, **caractérisée en ce que** le squelette de renfort a un gradient de rayon de pore.

5. Procédé de production d'une électrode de séparation par diffusion gazeuse suivant l'une ou plusieurs des revendications 1 à 4, **caractérisé en ce que** l'on imprègne le squelette de renfort d'une solution basique de monomères formant un aérogel ou un xérogel, on le gélifie et on le fait vieillir, on le sèche et ensuite on le pyrolyse sous gaz de protection et on le rend hydrophobe.

6. Procédé suivant la revendication 5, **caractérisé en ce que**, avant le séchage, on remplace le liquide contenu dans les pores par un liquide ayant une petite tension superficielle.

7. Procédé suivant la revendication 5 ou 6, **caractérisé en ce que** l'on sèche de manière sous-critique.

8. Procédé suivant l'une des revendications 5 à 7, **caractérisé en ce que** l'on effectue la pyrolyse à une température comprise entre 600 et 2000°C.

9. Procédé suivant l'une ou plusieurs des revendications 5 à 8, **caractérisé en ce que** l'on rend hydrophobe par une silylation.
